# EUROPÄISCHE PATENTSCHRIFT

(11) **EP 1 029 488 B1**
(45) Veröffentlichungstag und Bekanntmachung des Hinweises auf die Patenterteilung: **19.11.2003**
(21) Anmeldenummer: 00102068.4
(22) Anmeldetag: 02.02.2000
(51) Int. Cl.: A47J 37/12

(54) **Friteuse**
Fryer
Friteuse

(30) Priorität: 19.02.1999 DE 19907129
(43) Veröffentlichungstag der Anmeldung: 23.08.2000
(73) Patentinhaber: BSH Bosch und Siemens Hausgeräte GmbH, 81669 München (DE)
(72) Erfinder: Willmes, Virginie, 67400 Illkirch (FR); Reiling, Marco, 75236 Ersingen (DE); Stare, Alexandre, 57600 Forbach (FR)

(56) Entgegenhaltungen:
- EP-A- 0 309 770
- EP-A- 0 560 431
- EP-A- 0 783 861
- EP-A- 0 815 786
- DE-A- 3 719 308
- DE-U- 9 412 140

## Beschreibung

Die Erfindung betrifft eine Friteuse gemäß dem Oberbegriff von Anspruch 1.

Die Friteuse hat ein Gefäß für flüssiges Öl und für in diesem Öl zu fritierendes Fritiergut und mindestens einen elektrischen Heizkörper zum Erhitzen des Öls. Der Begriff "fritieren" bedeutet hierbei jede Art von fritieren, garen, backen und braten in heißem Öl. Demgemäß beinhaltet der Begriff "Fritiergut" jede Art von Nahrungsmittel.

Durch die Erfindung soll die Aufgabe gelöst werden, die Friteuse derart zu gestalten, daß ihre Montage erleichtert wird und ihre Benutzung einfacher und wirtschaftlicher ist, und Verletzungsgefahren vermieden oder zumindest reduziert werden.

Diese Aufgabe wird gemäß der Erfindung durch die kennzeichnenden Merkmale von Anspruch 1 gelöst.

Die Friteuse nach der Erfindung ist dadurch gekennzeichnet, daß ein Temperatursensor in solcher Nähe zu dem Heizkörper angeordnet ist, daß er auf dessen Temperatur auch dann schnell reagiert, wenn sich im Gefäß kein Öl befindet, und daß eine Steuereinrichtung vorgesehen ist, d:e in Abhängigkeit von der Funktion des Temperatursensors die elektrische Stromversorgung für den Heizkörper abschaltet, wenn das vom Temperatursensor ermittelte Temperaturverhalten des Heizkörpers mindestens einem vorbestimmten Kriterium entspricht, jedoch die Stromversorgung für einen normalen Betrieb des Heizkörpers freigibt, wenn solche Kriterien nicht vorliegen, wobei der Temperatursensor an dem Gefäß außen angeordnet ist und mindestens ein Teil des Heizkörpers so naht an die dem Temperatursensor gegenüberliegende Innenseite des Gefäßes angrenzt, dass zwischen dem Heizkörper und der Gefäßwand kein Zwischenraum oder nur ein so kleiner Zwischenraum vorhanden ist, dass dies den Temperaturübergang vom Heizkörper zur Gefäß wand nicht oder nur unwesentlich behindert.

Weitere Merkmale der Erfindung sind in den Unteransprüchen enthalten.

Gemäß einer bevorzugten Ausführungsform der Erfindung ist der Temperaturfühler außerhalb des Gefäßes derart angeordnet daß er eine direkte Erfassung der Oberflächentemperatur des Heizkörpers ermöglicht. Um dies zu erreichen, kann das Gefäß so verformt sein, daß der Temperatursensor sehr nahe unter dem Heizkörper angebracht werden kann. Die Erfindung ermöglicht
a) eine schnelle Erkennung eines Trockenlaufes des Heizkörpers, wenn kein oder zu wenig Öl im Gefäß der Friteuse ist;
b) die Erkennung, daß am Temperaturfühler kein Temperaturanstieg stattfindet, obwohl der Heizkörper voll mit elektrischer Leistung versorgt wird und dadurch mit voller Leistung heizt, beispielsweise wenn bei einer Friteuse mit einem aus ihrem Gefäß herausklappbaren oder anderweitig herausnehmbaren Heizkörper der Heizkörper nicht im Gefäß ist;
c) einen Fettschmelzbetrieb, bei welchem der Temperaturfühler die Oberflächentemperatur des Heizkörpers so lange regelt, bis an einem zweiten Temperatursensor eine vorbestimmte Mindesttemperatur von flüssigem Öl bzw. geschmolzenem Fett erreicht ist und dadurch dann die Friteuse automatisch auf normalen Fritierbetrieb umgeschaltet wird. Bei dem normalen Fritierbetrieb kann die Heizleistung des Heizkörpers automatisch begrenzt oder geregelt werden, beispielsweise durch eine Temperaturregelung oder durch eine Leistungsregelung.

Die Erfindung wird im folgenden mit Bezug auf Zeichnungen anhand von bevorzugten Ausführungsformen als Beispiele beschrieben.

In den Zeichnungen zeigen:
- Fig. 1: schematisch und im Vertikalschnitt eine Friteuse nach der Erfindung,
- Fig. 2: schematisch und im Vertikalschnitt eine weitere Ausführungsform einer Friteuse nach der Erfindung,
- Fig. 3: eine vergrößerte Darstellung eines Schalters für die Friteuse von Fig. 2,
- Fig. 4: ein Ablaufschema eines Betriebsverfahrens einer Friteuse nach der Erfindung, beispielsweise der Friteuse nach den Fig. 1 bis 3,
- Fig. 5: ein Ablaufschema eines weiteren Betriebsverfahrens einer Friteuse nach der Erfindung, beispielsweise einer Friteuse nach den Fig. 1 bis 3.

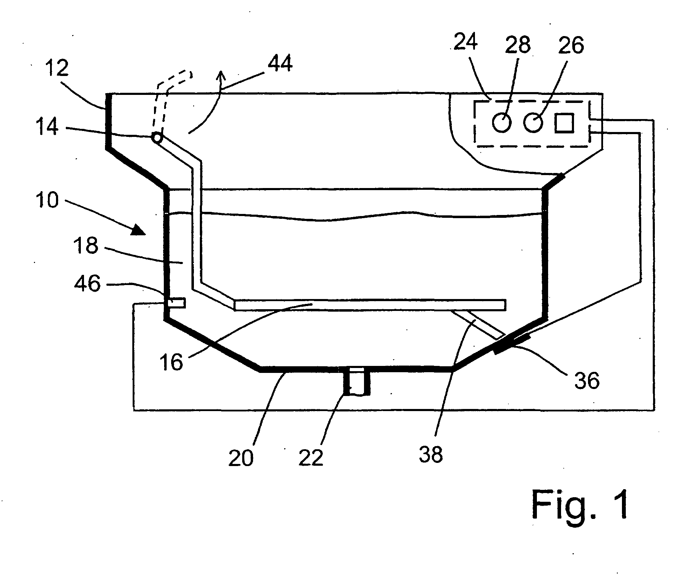

Die Friteuse 10 von Fig. 1 enthält in einem Gefäß 12 einen um eine Schwenkachse 14 herausklappbaren Heizkörper 16 innerhalb des Öl 18 aufzunehmenden unteren Bereiches dieses Gefäßes 12. Der Gefäßboden 20 ist an seiner tiefsten Stelle mit einem wahlweise aufmachbaren Auslaß 22 zum Ablassen des Öles 18 versehen. Der Heizkörper 16 wird durch Stromversorgung von einem Steuergerät 24 geheizt. Das Steuergerät 24 hat ein manuell betätigbares Einstellelement 26 zum Einschalten der Stromversorgung für den Heizkörper 16 und vorzugsweise auch zum Einstellen verschiedener Heizleistungen oder gemäß anderer Ausführungsform zum Einstellen verschiedener Heiztemperaturen. Gemäß der bevorzugten Ausführungsform ist außerdem ein Einstellelement 28 zum wahlweise Einschalten eines Fettschmelzvorganges vorgesehen. Wenn das Öl 18 durch Alterung nicht mehr brauchbar ist, muß es durch frisches Öl ersetzt werden, was entweder direkt frisches Öl sein kann oder geschmolzenes Fett, welches durch Fettstücke gebildet wird, die auf den Heizkörper 16 gelegt werden und dann mit einer vorbestimmten Fettschmelztemperatur geschmolzen werden, wenn am Fettschmelz-Einstellelement 28 ein Fettschmelzvorgang gewählt wird.

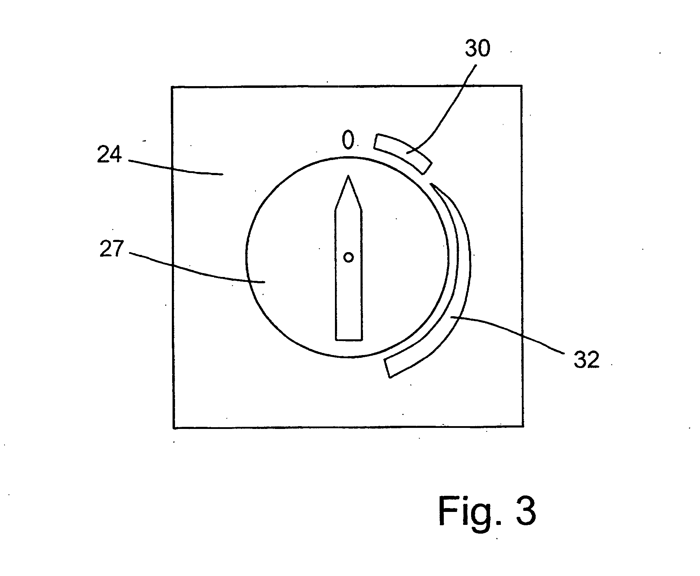

Wie Fig. 3 in einem Beispiel zeigt, kann die Funktion eines Fettschmelz-Einstellelementes 28 in das Einstellelement 26 integriert sein. Als Beispiel zeigt Fig. 3 einen Drehschalter 27, welcher auf der Stellung "O" die gesamte Stromzufuhr zum Heizen des Heizkörpers 16 abschaltet; welcher in einem Bereich 30 auf "Fettschmelzbetrieb" geschaltet ist; und welcher in einem Bereich 32 auf "Fritierbetrieb" gestellt ist, wobei der Bereich 32 vorzugsweise derart gestaltet ist, daß verschiedene Drehpositionen des Drehschalters 27 verschiedene Öl-Temperaturwerte oder gemäß anderer Ausführungsform verschiedene Heizkörper-Leistungswerte bedeuten.

Gemäß der Erfindung ist ein Heizkörper-Temperatursensor 36 in solcher Nähe zu dem Heizkörper 16 angeordnet, daß er auf dessen Temperatur auch dann schnell reagiert, wenn sich in dem Gefäß 12 kein oder den Heizkörper 16 nicht ausreichend bedeckendes Öl befindet. Der Heizkörper-Temperatursensor 36 ist vorzugsweise nicht direkt am Heizkörper 16 angebracht, sondern nahe bei ihm auf der Innenseite oder vorzugsweise auf der Außenseite des Gefäßes 12, was konstruktiv am einfachsten ist und keine Verschmutzung des Temperatursensors zur Folge hat. Der Heizkörper-Temperatursensor 36 muß jedoch so nahe bei dem Heizkörper 16 angeordnet sein, daß er dessen Temperatur, nicht jedoch die Temperatur des Öls 18 mißt. Zu diesem Zwecke kann der Heizkörper 16, welcher mit Höhenabstand über dem Boden 20 angeordnet ist, einen zum Heizkörper-Temperatursensor 36 hin wegragenden oder abgebogenen Heizkörpervorsprung 38 haben, wie dies Fig. 1 zeigt, welcher an der Wand des Gefäßes 12 anliegt oder nur ein wenig von ihr entfernt ist.

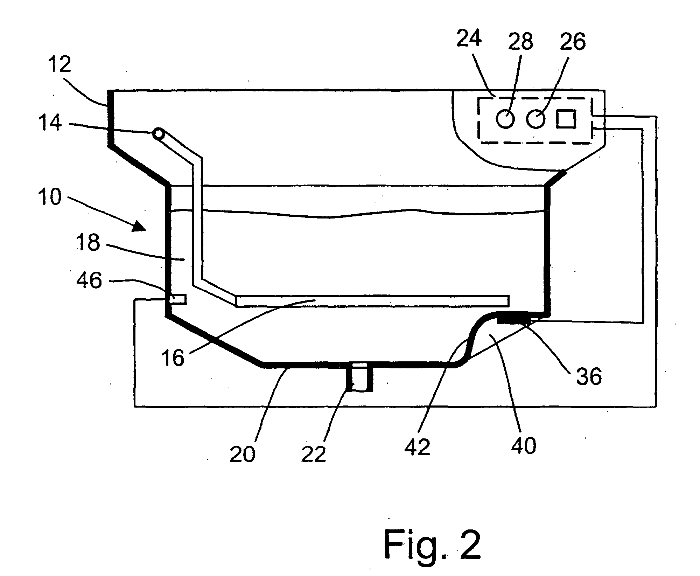

Zur Vermeidung eines solchen Heizkörper-Vorsprunges 38 wird gemäß Fig. 2 vorgschlagen, den unteren Bereich des Gefäßes 12 mit einer kleinen, nach außen offenen Nische 40 zu versehen, durch welche das Gefäß 12 eine bis zum Heizkörper 16 nach innen ragende Ausbeulung 42 hat. Der Heizkörper-Temperatursensor 36 ist in der Nische 40 untergebracht. Dadurch kann ein Standard-Heizkörper 16 verwendet werden, wie er auch für andere Friteusen verwendet wird.

Mit Ausnahme des hier beschriebenen Unterschiedes durch die Nische 40 sind die beiden Ausführungsformen von Fig.1 einerseits und von Fig. 2 andererseits identisch.

Gemäß der Erfindung ist die Steuereinrichtung 24 derart ausgebildet, daß sie in Abhängigkeit von der Funktion des Heizkörper-Temperatursensors 36 die elektrische Stromversorgung für den Heizkörper abschaltet, wenn das Temperaturverhalten des Heizkörpers mindestens einem vorbestimmten Kriterium entspricht, jedoch die Stromversorgung für einen normalen Betrieb des Heizkörpers 16 freigibt, wenn solche Kriterien nicht vorliegen.

Ein solches Kriterium ist vorzugsweise dann gegeben, wenn nach dem Einschalten der Friteuse am Einstellelement 26 vom Heizkörper-Temperatursensor 36 ein Temperaturanstiegsgradient, d.h. ein bestimmter Temperatur-Mindestanstieg innerhalb einer vorbestimmten Zeit, ermittelt wird, welcher größer ist als ein vorbestimmter zulässiger Wert. Ein solcher Temperaturanstiegsgradient, der gleich oder größer einem vorbestimmten Grenzwert ist, tritt dann auf, wenn der Heizkörper 16 nicht oder nicht ausreichend mit flüssigem Öl 18 umgeben ist.

Ein anderes Kriterium kann gemäß der Erfindung das Fehlen eines Temperaturanstieges von einer bestimmten Mindestgröße innerhalb einer vorbestimmten Zeit nach dem Einschalten des Fritierbetriebes sein. Wenn nach dem Einschalten eines Fritierbetriebes der Heizkörper 16 heiß wird, ohne daß dies von dem Heizkörper-Temperatursensor 36 erkannt wird, kann dies bedeuten, daß der Heizkörper 16 um seine Schwenkachse 14 entsprechend einem in Fig. 1 gezeigten Pfeil 44 aus dem Gefäß 12 herausgeschwenkt ist.

Ein anderes Kriterium kann gemäß der Erfindung ein vorbestimmter Temperatur-Höchstwert sein, welchen das Öl und/oder der Heizkörper 16 nicht überschreiten darf, beispielsweise wegen Brandgefahr.

Bei beiden Ausführungsformen nach den Fig. 1 und 3 ist ein zweiter oder Öl-Temperatursensor 46 von dem Heizkörper 16 mit einem Abstand angeordnet, der mindestens teilweise durch den vom Öl 18 einzunehmenden Gefäßraum gebildet ist, damit er auf die Temperatur des Öl 18, weniger jedoch auf die Temperatur des Heizkörpers 16 reagieren kann, und ein von der Temperatur des Öls 18 abhängiges Signal an die Steuereinrichtung 24 geben kann. Die Steuereinrichtung 24 regelt dadurch für den Fritierbetrieb die Stromzufuhr zum Heizkörper 16 in Abhängigkeit von einem durch die Einstellung des Einstellelements 26 gegebenen Sollwert und in Abhängigkeit von einem vom Öl-Temperatursensor 46 als Istwert ermittelten Temperaturwert des Öls 18.

Wenn an dem in den Fig. 1 und 2 gezeigten Fettschmelz-Einstellelement 28 oder an dem in Fig. 3 gezeigten Einstellelement 27 ein Fettschmelzvorgang gewählt wird, dann wird dem Heizkörper 16 Strom derart zugeführt, daß seine Heizkörpertemperatur einen vorbestimmten Wert nicht übersteigt. Diese Strombegrenzung für den Fettschmelzvorgang kann fest vorgegeben sein oder in Abhängigkeit von dem Temperatur-Istwert des Heizkörper-Temperatursensors 36 und einem fest vorgegebenen oder vorzugsweise variabel wählbaren Sollwert geregelt werden.

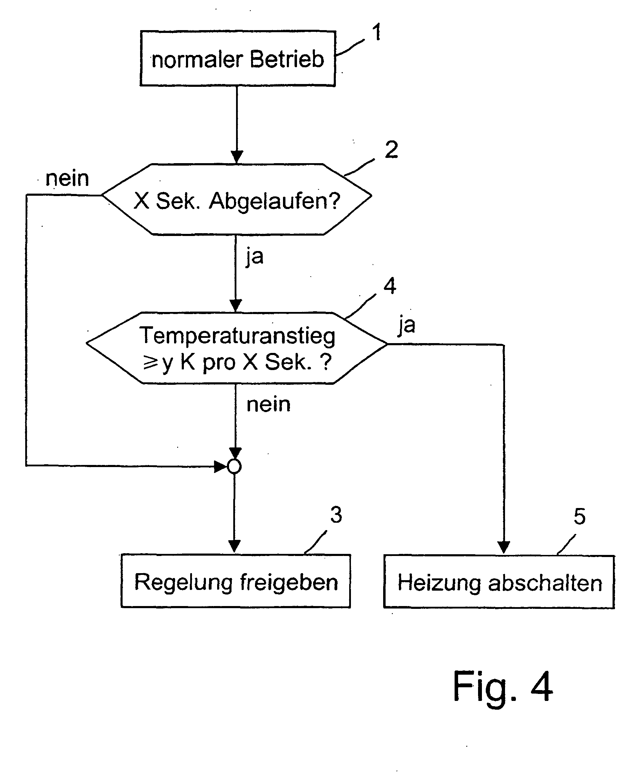

Die Steuereinrichtung 24 ist vorzugsweise derart ausgebildet, daß sich das in Fig. 4 gezeigte Verfahren ergibt:
Schritt 1: Friteuse einschalten auf Fritierbetrieb;
Schritt 2: Überwachen oder Abfragen, ob eine vorbestimmte Zeitdauer "X", beispielsweise Sekunden, abgelaufen ist; falls "Nein", dann die Regelung für den Fritierbetrieb gemäß
Schritt 3 freigeben; falls "Ja", dann die weitere Entscheidung treffen gemäß Schritt 4, ob ein Temperaturanstieg gleich oder größer einem vorbestimmten Wert "Y" während der Zeit "X" stattgefunden hat; falls "Nein", dann die Regelung gemäß Schritt 3 freigeben oder falls "Ja", dann die Heizung bzw. den Heizkörper 16 abschalten gemäß Schritt 5.

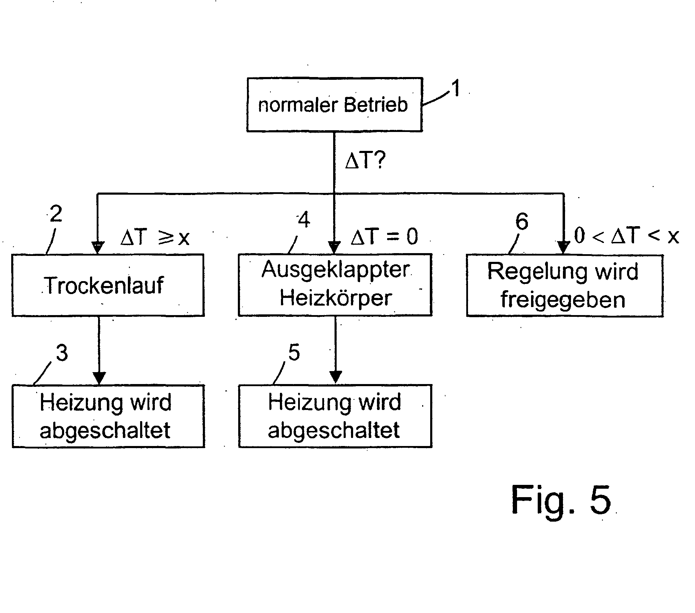

Der Verfahrensablauf von Fig. 4 kann mit weiteren Funktionen kombiniert werden, beispielsweise zu einem Verfahrensablauf der Steuereinrichtung 24 gemäß Fig. 5. Fig. 5 beinhaltet in einem Schritt 1 das Einschalten der Friteuse auf normalen Fritierbetrieb; Schritt 2: eine Entscheidung, ob ein Temperaturgradient größer oder gleich einem vorbestimmten Wert "x" vorliegt, was bedeuten würde, daß im Gefäß 12 kein oder zu wenig Öl 18 vorhanden ist, in welchem Falle dann automatisch gemäß einem Schritt 3 die Heizung bzw. der Heizkörper 16 abgeschaltet wird; wenn bei der Prüfung des Temperaturgradienten festgestellt wird, daß der Temperaturgradient ΔT den Wert Null hat, also keine Temperaturänderung trotz eingeschaltetem Heizkörper vom Heizkörper-Temperatursensor ermittelt worden ist, dann bedeutet dies gemäß Schritt 4, daß der Heizkörper 16 aus dem Gefäß 12 herausgeklappt ist, weshalb dann automatisch gemäß Schritt 5 die Heizung abgeschaltet wird; wenn jedoch der vom Heizkörper-Temperatursensor 36 ermittelte Temperaturgradient größer dem Wert Null, jedoch kleiner dem Höchstwert "x" ist, dann bedeutet dies, daß keine Fehlfunktion vorliegt, weshalb in diesem Falle die Regelung des Fritierbetriebes gemäß Schritt 6 freigegeben wird.

## Patentansprüche

1. Friteuse mit einem Gefäß (12) für flüssiges Öl (18) und für in diesem Öl zu fritierendes Fritiergut und mit mindestens einem elektrischen Heizkörper (16) zum Erhitzen des Öls, wobei der Heizkörper (16) innerhalb des Gefäßes (12) angeordnet ist, **dadurch gekennzeichnet, dass** ein Temperatursensor (36) in solcher Nähe zu dem Heizkörper (16) angeordnet ist, dass er auf dessen Temperatur auch dann schnell reagiert, wenn sich im Gefäß (12) kein Öl befindet, und dass eine Steuereinrichtung (24) vorgesehen ist, die in Abhängigkeit von der Funktion des Temperatursensors (36) die elektrische Stromversorgung für den Heizkörper (16) abschaltet, wenn die von Temperatursensor (36) ermittelte Temperatursituation mindestens einem vorbestimmten Kriterium entspricht, jedoch die Stromversorgung für einen normalen Betrieb des Heizkörpers (16) freigibt, wenn solche Kriterien nicht vorliegen, wobei der Temperatursensor (36) an dem Gefäß (12) außen angeordnet ist und mindestens ein Teil des Heizkörpers (16) so nahe an die dem Temperatursensor (36) gegenüberliegende Innenseite des Gefäßes (12) angrenzt, dass zwischen dem Heizkörper (16) und der Gefäßwand kein Zwischenraum oder nur ein so kleiner Zwischenraum vorhanden ist, dass dies den Temperaturübergang vom Heizkörper (16) zur Gefäßwand nicht oder nur unwesentlich behindert.

2. Friteuse nach Anspruch 1, **dadurch gekennzeichnet, daß** mindestens ein vorbestimmtes Kriterium ein Öltemperaturänderungsgradient, vorzugsweise ein Öltemperaturanstiegsgradient von vorbestimmter Mindestgröße ist.

3. Friteuse nach einem der vorhergehenden Ansprüche, **dadurch gekennzeichnet, daß** mindestens ein vorbestimmtes Kriterium das Fehlen eines Temperaturanstieges von einer vorbestimmten Mindestgröße innerhalb einer vorbestimmten Zeit nach dem Einschalten des Fritierbetriebes ist.

4. Friteuse nach einem der vorhergehenden Ansprüche, **dadurch gekennzeichnet, daß** mindestens ein vorbestimmtes Kriterium ein vorbestimmter Öltemperatur-Höchstwert ist.

5. Friteuse nach einem der vorhergehenden Ansprüche, **dadurch gekennzeichnet, daß** zur Regelung der Temperatur des Öls für den Fritierbetrieb ein Öl-Temperatursensor (46) vorgesehen ist, in Abhängigkeit von dessen gemessenem Öltemperatur-Istwert und in Abhängigkeit von einem Sollwert die Steuereinrichtung (24) die Stromversorgung zu dem Heizkörper (16) regelt, wenn keines der genannten Kriterien vorliegt, daß der Öl-Temperatursensor (46) von dem Heizkörper (16) einen Abstand hat, der mindestens teilweise durch den Ölaufnahmeraum des Gefäßes (12) gebildet ist und so groß ist, daß der Öl-Temperatursensor (46) nicht die Temperatur des Heizkörpers (16), sondern die Temperatur des Öls (18) in einem wesentlichen Abstand von dem Heizkörper (16) erfaßt.

6. Friteuse nach Anspruch 5, **dadurch gekennzeichnet, daß** der Öl-Temperatursensor (46) mindestens teilweise in dem Ölaufnahmeraum des Gefäßes (12) angeordnet ist.

7. Friteuse nach einem der vorhergehenden Ansprüche, **dadurch gekennzeichnet, daß** ein von einer Benutzerperson betätigbares Einstellelement (28;27) zum Wählen eines Fettschmelzvorganges vorgesehen ist, und daß für den Fettschmelzvorgang die vom Heizkörper (16) erzeugbare Hitze auf einen Maximalwert begrenzt wird.

8. Friteuse nach Anspruch 7, **dadurch gekennzeichnet, daß** die Steuereinrichtung (24) als Regelungsvorrichtung zur Regelung der von dem Heizkörper (16) für den Schmelzvorgang zu erzeugenden Hitze ausgebildet ist.

9. Friteuse nach Anspruch 8, **dadurch gekennzeichnet, daß** der Temperaturfühler (36), der zur Erkennung der Temperatur des Heizkörpers (16) vorgesehen ist, der Temperatur-Istwertgeber für die Regelung ist.

10. Friteuse nach einem der vorhergehenden Ansprüche, **dadurch gekennzeichnet, daß** der mindestens eine Heizkörper (16) in dem Gefäß (12) mit Höhenabstand über dem Gefäßboden (20) angeordnet ist und sich quer durch den Ölaufnahmeraum des Gefäßes erstreckt.

11. Friteuse nach Anspruch 10, **dadurch gekennzeichnet, daß** der mindestens eine Heizkörper (16) mit dem Gefäß (12) mechanisch derart verbunden ist, daß er ohne diese Verbindung zu trennen aus dem Innenraum des Gefäßes herausnehmbar ist, wobei die elektrische Stromversorgung des Heizkörpers sich durch die mechanische Verbindungsstelle (14) hindurch erstreckt.

## Claims

1. Fryer with a vessel (12) for liquid oil (18) and for frying stock to be fried in this oil and with at least one electric heating body (16) for heating the oil, wherein the heating body (16) is arranged within the vessel (12), **characterised in that** a temperature sensor (36) is arranged in such proximity to the heating body (16) that it rapidly reacts to the temperature thereof when no oil is present in the vessel (12) and that a control device (24) is provided which switches off the electrical current supply for the heating body (16) in dependence on the function of the temperature sensor (36) when the temperature situation ascertained by the temperature sensor (36) corresponds with at least one predetermined criterion, but frees the current supply for a normal operation of the heating body (16) when such criteria are not present, wherein the temperature sensor (36) is externally arranged at the vessel (12) and at least a part of the heating body (16) so closely adjoins the inner side of the vessel (12) opposite the temperature sensor (36) that there is present between the heating body (16) and the vessel wall either no intermediate space or only such a small intermediate space that this does not prevent or prevents only insubstantial the temperature transfer from the heating body (16) to the vessel wall.

2. Fryer according to claim 1, **characterised in that** at least one predetermined criterion is an oil temperature change gradient, preferably an oil temperature rise gradient of predetermined minimum size.

3. Fryer according to one of the preceding claims, **characterised in that** at least one predetermined criterion is the absence of a temperature rise of a predetermined minimum size within a predetermined time after switching-on of the frying operation.

4. Fryer according to one of the preceding claims, **characterised in that** at least one predetermined criterion is a predetermined oil temperature maximum value.

5. Fryer according to one of the preceding claims, **characterised in that** an oil temperature sensor (46) is provided for regulation of the temperature of the oil for the frying operation, the control device (24) regulates the current supply to the heating body (16) in dependence on the measured oil temperature actual value of the temperature sensor and in dependence on a target value when none of the stated criteria are present, that the oil temperature sensor (46) has a spacing from the heating body (16) which is formed at least partly by the oil receiving space of the vessel (12) and is of such a size that the oil temperature sensor (46) detects not the temperature of the heating body (16), but the temperature of the oil (18) at a significant spacing from the heating body (16).

6. Fryer according to claim 5, **characterised in that** the oil temperature sensor (46) is arranged at least partly in the oil receiving space of the vessel (12).

7. Fryer according to one of the preceding claims, **characterised in that** a setting element (28; 27), which is actuable by a user, for selection of a fat melting process is provided and that for the fat melting process the heat producible by the heating body (16) is limited to a maximum value.

8. Fryer according to claim 7, **characterised in that** the control device (24) is constructed as a regulating device for regulation of the heat to be produced by the heating body (16) for the melting process.

9. Fryer according to claim 8, **characterised in that** the temperature sensor (36), which is provided for recognition of the temperature of the heating body (16), is the temperature actual value transmitter for the regulation.

10. Fryer according to one of the preceding claims, **characterised in that** the at least one heating body (16) is arranged in the vessel (12) at a spacing in height above the vessel base (20) and extends transversely through the oil receiving space of the vessel.

11. Fryer according to claim 10, **characterised in that** the at least one heating body (16) is mechanically connected with the vessel (12) in such a manner that it is removable from the inner space of the vessel without having to separate this connection, wherein the electrical current supply of the heating body extends through the mechanical connecting point (14).

## Revendications

1. Friteuse avec une cuve (12) pour de l'huile liquide (18) et pour un produit de friture à frire dans cette huile et avec au moins un corps de chauffe électrique (16) pour chauffer l'huile, le corps de chauffe (16) étant disposé à l'intérieur d e la cuve (12), **caractérisé en ce qu'**un détecteur de température (36) est disposé à proximité telle du corps de chauffe (16) qu'il réagit ensuite également rapidement à la température de celui-ci, lorsqu'il ne se trouve pas d'huile dans la cuve (12), et **en ce qu'**un dispositif de commande (24) est prévu qui, en fonction de l'activité du détecteur de température (36), coupe l'alimentation en courant électrique du corps de chauffe (16) lorsque la situation de température déterminée par le détecteur de température (36) correspond à au moins un critère prédéterminé, libère toutefois l'alimentation en courant pour un fonctionnement normal du corps de chauffe (16) lorsque ces critères n'existent pas, le détecteur de température (36) étant disposé à l'extérieur sur la cuve (12) et au moins une partie du corps de chauffe (16) est adjacente au côté interne, opposé au détecteur de température (36), de la cuve (12) à une proximité telle qu'entre le corps de chauffe (16) et la paroi de cuve aucun espace intermédiaire n'est présent ou un espace intermédiaire si petit que celui-ci n'empêche pas ou seulement de façon insignifiante la transition thermique du corps de chauffe (16) à la paroi de cuve.

2. Friteuse selon la revendication 1, **caractérisée en ce qu'**au moins un critère prédéterminé est un gradient de modification de température de l'huile, de préférence un gradient d'augmentation de la température de l'huile de grandeur minimale prédéterminée.

3. Friteuse selon l'une des revendications précédentes, **caractérisée en ce qu'**au moins un critère prédéterminé est l'absence d'une augmentation de température d'une grandeur minimale prédéterminée au sein d'un temps prédéterminé après mise sous tension du fonctionnement de cuisson en friture.

4. Friteuse selon l'une des revendications précédentes, **caractérisée en ce qu'**au moins un critère prédéterminé est une valeur maximale prédéterminée de température de l'huile.

5. Friteuse selon l'une des revendications précédentes, **caractérisée en ce que** pour régler la température de l'huile pour le fonctionnement de friteuse, un détecteur de température de l'huile (46) est prévu, en fonction de sa valeur réelle de température mesurée de l'huile et en fonction d'une valeur théorique le dispositif de commande (24) règle l'alimentation en courant au corps de chauffe (16) lorsque aucun des critères cités n'est présent de sorte que le détecteur de température de l'huile (46) se trouve à distance du corps de chauffe (16), écartement qui est formé au moins partiellement par l'espace de recueil de l'huile de la cuve (12) et est si grand que le détecteur de température de l'huile (46) détecte non pas la température du corps de chauffe (16) mais la température de l'huile (18) dans un écartement substantiel du corps de chauffe (16).

6. Friteuse selon la revendication 5, **caractérisée en ce que** le détecteur de température de l'huile (46) est disposé au moins partiellement dans l'espace de recueil de l'huile de la cuve (12).

7. Friteuse selon l'une des revendications précédentes, **caractérisée en ce qu'**un élément de réglage (28, 27) pouvant être actionné par un utilisateur est prévu pour sélectionner un processus de fonte de la graisse, et **en ce que** pour le processus de fonte de la graisse la chaleur pouvant être produite par le corps de chauffe (16) est limitée à une valeur maximale.

8. Friteuse selon la revendication 7, **caractérisée en ce que** le dispositif de commande (24) est conçu comme un dispositif de réglage pour le réglage de la chaleur à produire par le corps de chauffe (16) pour le processus de fonte.

9. Friteuse selon la revendication 8, **caractérisée en ce que** la sonde de température (36) qui est prévue pour reconnaître la température du corps de chauffe (16), est l'indicateur de valeur réelle de la température pour le réglage.

10. Friteuse selon l'une des revendications précédentes, **caractérisée en ce que** le au moins un corps de chauffe (16) est disposé dans la cuve (12) avec un écartement en hauteur au-dessus du fond de la cuve (20) et s'étend transversalement à l'espace de collecte de l'huile de la cuve.

11. Friteuse selon la revendication 10, **caractérisée en ce que** le au moins un corps de chauffe (16) est relié mécaniquement à la cuve (12) de telle manière que sans rompre cette liaison, il peut être enlevé de l'espace interne de la cuve, l'alimentation en courant électrique du corps de chauffe s'étendant à travers la jonction mécanique (14).
